# EUROPEAN PATENT APPLICATION

(11) **EP 4 525 509 A1**
(43) Date of publication of application: **19.03.2025**
(21) Application number: 24189563.0
(22) Date of filing: 18.07.2024
(51) Int. Cl.: H04W 28/02

(54) **COMMUNICATION CONTROL DEVICE, COMMUNICATION CONTROL METHOD, NON-TRANSITORY STORAGE MEDIUM, AND UE**

(30) Priority: 15.09.2023 JP 2023150482
(71) Applicant: TOYOTA JIDOSHA KABUSHIKI KAISHA, Aichi-ken, 471-8571 (JP)
(72) Inventor: LEE, Chunghan, Toyota-shi, Aichi-ken, 471-8571 (JP); OMI, Satoshi, Toyota-shi, Aichi-ken, 471-8571 (JP); ZHONG, Lei, Toyota-shi, Aichi-ken, 471-8571 (JP); ABE, Hiroshi, Toyota-shi, Aichi-ken, 471-8571 (JP); FURUSAWA, Toru, Toyota-shi, Aichi-ken, 471-8571 (JP)
(74) Representative: Simmons & Simmons

(57) **Abstract**

A communication control device includes a processor configured to perform communication throttling on a first user equipment (UE) determined to be located far from a base station out of a plurality of user equipments (UEs) connected to the base station.

## Description

### BACKGROUND OF THE INVENTION

### 1. Field of the Invention

The present disclosure relates to a communication control device, a communication control method, a non-transitory storage medium and a user equipment (UE).

### 2. Description of Related Art

There is a technique that, when there are two or more user UEs that can send or receive data by direct communication, UE information indicating the two or more UEs that can cooperatively send the data to a base station (300) is acquired, and control information including the UE information is sent to the base station (Japanese Unexamined Patent Application Publication No. 2022-181625 (JP 2022-181625 A)). As related art, there is also a technique described in Japanese Unexamined Patent Application Publication (Translation of PCT Application) No. 2017-516381 (JP 2017-516381 A).

### SUMMARY OF THE INVENTION

It is an object of the present disclosure to provide a communication control device, communication control method, and user equipment (UE) that can reduce power consumption related to communication.

A communication control device according to a first aspect of the present disclosure includes a processor, the processor being configured to perform communication throttling on a first UE determined to be located far from a base station out of a plurality of UEs connected to the base station.

A communication control method according to a second aspect of the present disclosure includes performing, by a communication control device, communication throttling on a first UE determined to be located far from a base station out of a plurality of UEs connected to the base station.

A non-transitory storage medium according to a third aspect of the present disclosure stores storing instructions that are executable by a processor of a computer and that cause the computer to operate as the communication control device according to the first aspect of the present disclosure.

A UE according to a fourth aspect of the present disclosure is a second UE that is not subjected to communication throttling out of a plurality of UEs connected to a base station when the communication throttling is performed on a first UE determined to be located far from the base station out of the UEs, the UE including a processor configured to receive information from the base station and to send the information received from the base station to the first UE by direct communication between the UEs.

According to the present disclosure, it is possible to reduce power consumption related to communication.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an example of the configuration of a communication system according to an embodiment;
FIG. 2A shows an example of the configuration of a communication control device;
FIG. 2B shows an example of the configuration of a UE;
FIG. 3 is a flowchart of an example of a process in the communication control device;
FIG. 4 is a flowchart showing an example of the process of step S03 in FIG. 3;
FIG. 5 is a flowchart showing an example of the process of step S04 in FIG. 3; and
FIG. 6 is a flowchart of an example of a process in the UE.

### DETAILED DESCRIPTION OF EMBODIMENTS

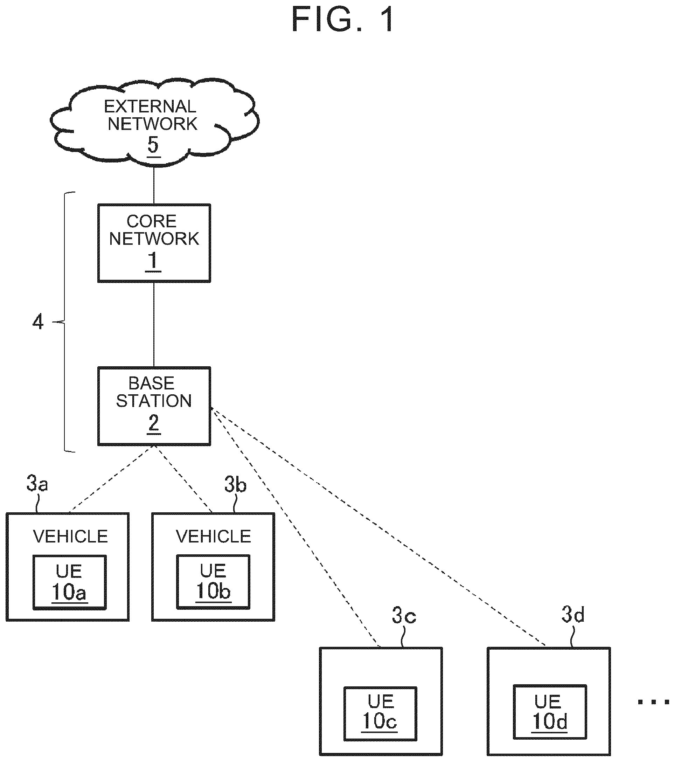

An embodiment of a communication control device and communication control method will be described with reference to the drawings. The configuration of the embodiment described below is illustrative, and the present disclosure is not limited to the configuration of the embodiment. FIG. 1 shows an example of a communication system according to the embodiment. The communication system includes: a cellular network 4 composed of a core network 1 and a base station 2; a plurality of user equipments (UEs) 10 connected to the base station 2; and an external network 5 connected to the core network 1.

In FIG. 1, UEs 10a, 10b, 10c, and 10d are illustrated as an example of the UEs 10 connected (in a connected state) to the base station 2. It is herein assumed that the distance between each UE 10c, 10d and the base station 2 is greater than the distance between each UE 10a, 10b and the base station 2 (the UEs 10c, 10d are located farther from base station 2 than the UEs 10a, 10b). In the following description, the UEs 10a to 10d will be simply referred to as "UE 10" or "UEs 10" when they are not distinguished from each other.

The UE 10 is a terminal of a user (subscriber) of a communication service using the cellular network 4. The UE 10 can be connected to the base station 2 to communicate with its communication partner through the cellular network 4. The UEs 10a to 10d are mounted on vehicles 3a, 3b, 3c, and 3d, respectively. The vehicles 3a to 3d will be simply referred to as "vehicle 3" or "vehicles 3" when they are not distinguished from each other. The UE 10 need not necessarily be mounted on the vehicle 3. The UE 10 may be installed on the vehicle 3, may be detachably mounted on the vehicle 3, or may be merely placed inside the vehicle 3.

The following description illustrates an example in which the cellular network 4 is a fifth-generation (5G) network. The base station 2 is an access network (radio access network (RAN)) of the core network 1. A base station in 5G is called a gNB. The cellular network 4 may be a wireless local area network (LAN) (including Wi-Fi). In this case, the base station 2 is an access point in the wireless LAN, and the core network 1 is a public network.

The core network 1 is called a 5G core (5GC). The core network 1 includes functions (also referred to as entities or network nodes) related to a control plane and functions (entities) related to a user plane. The entities related to the control plane include Access and Mobility Management Function (AMF), Session Management Function (SMF), Policy Control Function (PCF), Network Exposure Function (NEF), Network Repository Function (NRF), Network Slice Selection Function (NSSF), Authentication Server Function (AUSF), Unified Data Management (UDM), and Network Data Analytics Function (NWDAF).

The AMF is a serving device for the UEs 10 in the 5GC (core network 1). The AMF accommodates the RAN (base station 2) and performs subscriber authentication, location (mobility) management for the individual UEs 10, etc. The UDM provides subscriber information or acquires, registers, deletes, and changes the states of the individual UEs. The SMF manages protocol data unit (PDU) sessions and controls a user plane function (UPF) to perform quality of service (QoS) control and policy control. A PDU session is a virtual communication channel for data transfer between the UE and a data network (DN; external network 5). The external network 5 (DN) is a data network outside the 5GC (such as the Internet). The PCF performs QoS control, policy control, charging control, etc. under the control of the SMF. The QoS control is communication quality control such as priority packet transfer. In the policy control, communication control such as QoS, and packet transfer handling, charging, etc. based on network or subscriber information is performed.

The 5GC includes the UPF as an entity (network node) related to the user plane. The UPF performs routing and forwarding, inspection, and QoS handling of user packets (user plane packets that are transmitted and received by the UE 10).

When the cellular network 4 is a long-term evolution (LTE) (4G) network, the base station 2 is called an eNB. The core network 1 is called an evolved packet core (EPC). The EPC includes, as entities related to the control plane, Mobility Management Entity (MME), Serving Gateway (SGW), Packet Data Network Gateway (PGW), Home Subscriber Server (HSS), Policy and Charging Rule Function (PCRF), Online Charging System (OCS), and Offline Charging System (OFCS).

The MME performs various controls such as subscriber management and equipment location management (mobility control). The SGW is a gateway accommodating the base station 2. The PGW is a gateway connected to the external network 5. Subscriber information and equipment location information are registered in the HSS. The HSS also performs user (UE) authentication. The PCRF sets network policies (such as conditions of network use and conditions of network operation (e.g., priority control), or charging rules). The OCS is an online charging system, and the OFCS is an offline charging system.

For example, the UE 10 may be a Data Communication Module (DCM) that is an example of an in-vehicle terminal mounted on a vehicle. The UE 10 can collect information on the vehicle (data regarding driving of the vehicle such as location and vehicle speed) from in-vehicle devices (e.g., a car navigation device, a drive recorder, and an electronic control unit (ECU)). The UE 10 can also collect data regarding communication of the vehicle (in-vehicle terminal). Data (user data) sent from the UE 10 is sent to a predetermined communication partner (e.g., a server device connected to the external network 5) via the cellular network 4.

The base station 2 and the core network 1 perform communication control such as registering the location of the UE 10, setting a route for data (packet) transfer between the UE 10 and its communication partner, and managing the quality of service (QoS). The base station 2 may be composed of at least one computer configured to communicate wirelessly. The core network 1 may be either one computer or a collection (cloud) of two or more computers that operates as the above entities. Each computer forming the base station 2 and the core network 1 operates as a communication control device 20 that performs various controls related to communication of the UEs 10.

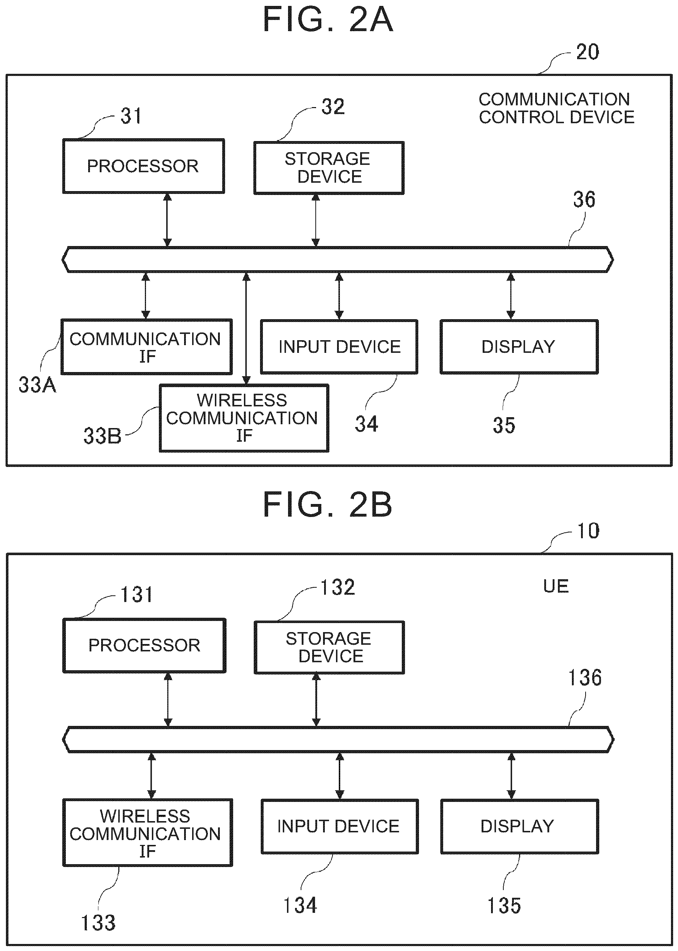

FIG. 2A shows an example of the configuration of the communication control device 20 (computer that operates as the communication control device 20). FIG. 2B shows an example of the configuration of the UE 10. In FIG. 2A, the communication control device 20 includes, as an example, a processor 31, a storage device 32, a communication interface (communication IF) 33A, a wireless communication interface (wireless communication IF) 33B, an input device 34, and a display 35. These components of the communication control device 20 are connected to each other via a bus 36.

The storage device 32 stores various programs and data. The processor 31 is an example of a control unit (controller), and is, for example, a central processing unit (CPU), a digital signal processor (DSP), a graphics processing unit (GPU), or a combination thereof. The processor 31 executes the programs stored in the storage device 32 and performs various processes such as calculations or processing using the data stored in the storage device 32 etc. By executing the programs, the communication control device 20 can perform various controls related to communication of the UEs 10. The communication IF 33A is a communication interface circuit for a wired network, and the wireless communication IF 33B is used for wireless communication with the UEs 10 etc. The input device 34 is a button, keys, touch panel, etc. that are used for entering information, performing settings, etc. The display 35 is used to display information. The wireless communication IF 33B is a component included in the communication control device 20 when the base station 2 includes the communication control device 20. The wireless communication IF 33B may not be included in the communication control device 20 in the core network 1.

In FIG. 2B, the UE 10 includes, as an example, a processor 131, a storage device 132, a wireless communication IF 133, an input device 134, and a display 135. These components of the UE 10 are connected to each other via a bus 136. These components have the same functions as the processor 31, the storage device 32, the wireless communication IF 33B, the input device 34, and the display 35, although there are differences in performance and type. The processor 131 is an example of a control unit (controller), and can perform various processes by executing programs stored in the storage device 132.

In the communication system shown in FIG. 1, traffic congestion of vehicles 3 etc. may create a situation where a plurality of UEs 10 is connected to a base station 2 located in (belonging to) the area with the traffic congestion. When a large number (plurality) of UEs 10 are connected to the base station 2, it causes congestion in the base station 2. This increases the load on the base station 2 and the core network 1, resulting in an increase in power consumption related to communication. A process that can cut (reduce) power consumption when a plurality of UEs 10 is connected to the base station 2 will be described in the embodiment.

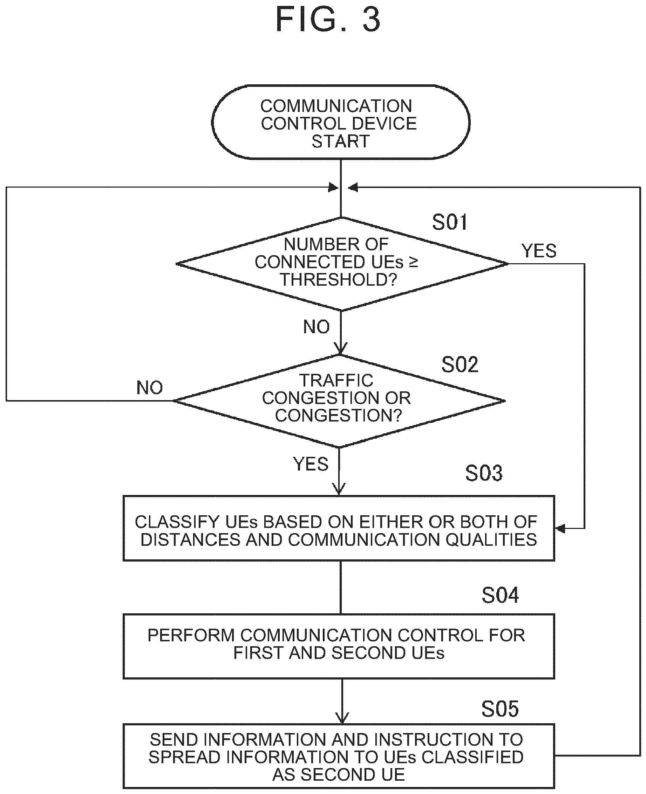

FIG. 3 is a flowchart of an example of a process in the communication control device 20 in the base station 2 or the core network 1. The process shown in FIG. 3 is performed by the processor 31 of the communication control device 20 in the base station 2. However, the process shown in FIG. 3 may be performed by the processor 31 of the communication control device 20 in the core network 1. For example, the process shown in FIG. 3 is started when the base station 2 detects (confirms) connection of a new UE 10 (vehicle 3) from session information in a message related to GPRS Tunneling Protocol User Plane (GTP-U) signaling (establishment of a PDU session). The process in FIG. 3 is performed to efficiently perform data transfer for the UE connected to the base station 2 to reduce power consumption.

In step S01, the processor 31 determines whether the number of UEs 10 connected (in a connected state) to the base station 2 is equal to or greater than a predetermined threshold. When the processor 31 determines that the number of connected UEs 10 is equal to or greater than the threshold, the process proceeds to step S03. Otherwise, the process proceeds to step S02.

In step S02, the processor 31 determines whether traffic congestion has occurred in the area (geographical area) where the base station 2 is located (belongs) or whether congestion has occurred in the base station 2. For example, the communication control device 20 in the core network 1 monitors the presence or absence of either or both of traffic congestion in the area to which the base station 2 belongs and congestion in the base station 2, and sends information indicating the presence or absence of traffic congestion and congestion to the base station 2. The processor 31 of the base station 2 stores the information indicating the presence or absence of traffic congestion and congestion in the storage device 32. In step S02, the processor 31 refers to the information indicating the presence or absence of traffic congestion and congestion stored in the storage device 32, and determines whether traffic congestion or congestion has occurred. When the processor 31 determines that traffic congestion or congestion has occurred, the process proceeds to step S03. Otherwise, the process returns to step S01.

The determination in step S02 may be made regarding either traffic congestion or congestion. The order of steps S01, S02 may be reversed, or one of them may be omitted. Steps S01, S02 may be optionally omitted.

In step S03, the processor 31 classifies a plurality of UEs 10 connected to the base station 2 into a first UE and a second UE (which will be described below), based on either or both of the distances between the base station 2 and the individual UEs 10 and the qualities of communication (communication qualities) between the base station 2 and the individual UEs 10.

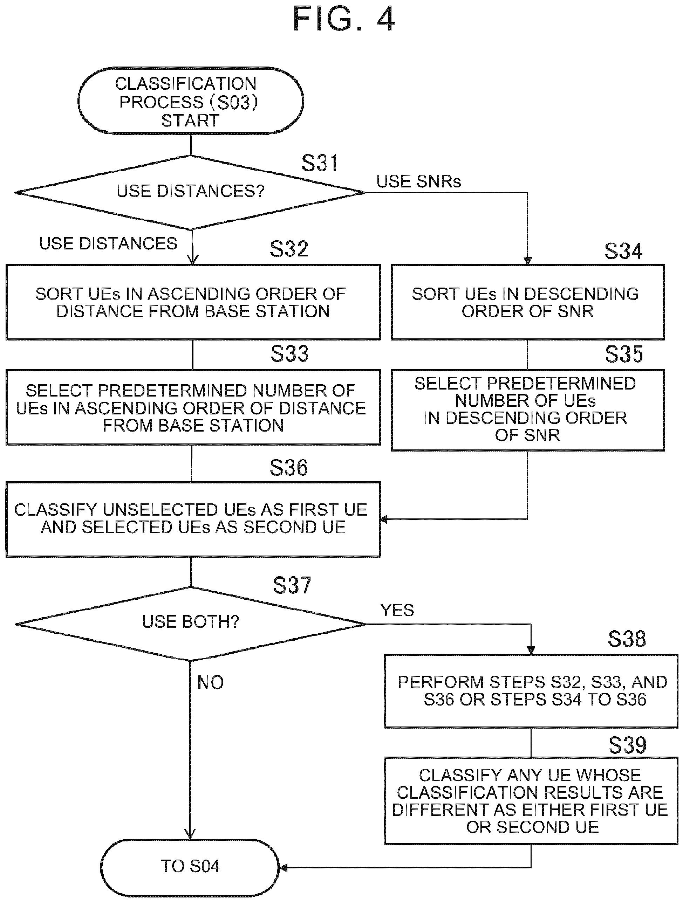

In step S04, the processor 31 performs communication control for the first and second UEs. FIG. 4 is a flowchart showing an example of the process of step S03 (classification of the UEs 10). The storage device 32 stores information indicating the distances (e.g., straight line distances) between the base station 2 and the individual UEs 10. The storage device 32 also stores information indicating the signal-to-noise ratios (SNRs) as information indicating the communication qualities between the base station 2 and the individual UEs 10. The method and timing of obtaining the information indicating the distances and the information indicating the SNRs can be set as appropriate. The information indicating the distances and the information indicating the SNRs may be selectively used for classification of the UEs into the first and second UEs that will be described later. Both the information indicating the distances and the information indicating the SNRs may be used for classification of the UEs into the first and second UEs.

In step S31 of FIG. 4, the processor 31 determines whether to use the distances to perform the classification. When the processor 31 determines to use the distances, the process proceeds to step S32. Otherwise, the process proceeds to step S34.

In step S32, the processor 31 sorts the UEs 10 in ascending order of distance. In step S33, the processor 31 selects a predetermined number (one or more) of UEs 10 in ascending order of distance. The process then proceeds to step S36.

In step S34, the processor 31 sorts the UEs 10 in descending order of SNR. In step S35, the processor 31 selects a predetermined number (one or more) of UEs 10 in descending order of SNR. In step S36, the processor 31 classifies the unselected (remaining) UEs 10 as the first UE located far from the base station 2 (determines that the unselected (remaining) UEs 10 to be the first UE). The processor 31 also classifies the selected predetermined number of UEs 10 as the second UE (determines the selected predetermined number of UEs 10 to be the second UE).

In step S37, the processor 31 determines whether to use both the distances and the SNRs to perform the classification. When the processor 31 determines to use both the distances and the SNRs, the process proceeds to step S38. Otherwise, the classification process of FIG. 4 ends, and the process proceeds to step S04.

In step S38, when steps S32, S33, and S36 (classification based on the distances) have been performed, the processor 31 performs steps S34 to S36 (classification based on the SNRs). On the other hand, when steps S34 to S36 have been performed, the processor 31 performs steps S32, S33, and S36.

In step S39, the processor 31 compares the classification result based on distances and the classification result based on the SNRs. When there is any UE 10 whose classification result based on the distances and classification result based on the SNRs are different, the processor 31 classifies that UE 10 as either the first UE or the second UE. A classification rule(s) for this case can be set as appropriate. Thereafter, the classification process shown in FIG. 4 ends, and the process proceeds to step S04. For example, of the UEs 10a to 10d, the UEs 10c, 10d are classified as the first UE, and the UEs 10a, 10b are classified as the second UE by the process of step S04.

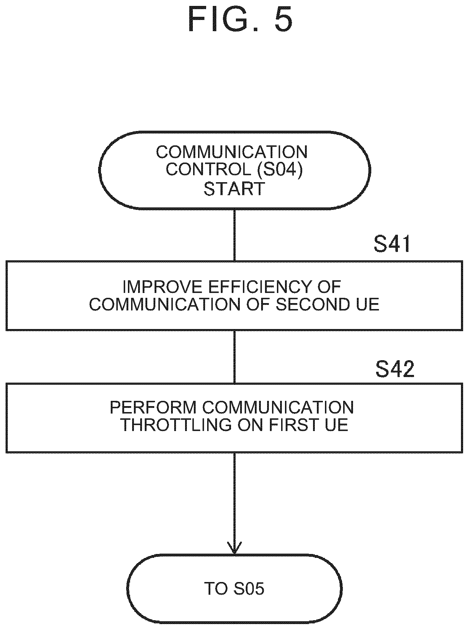

FIG. 5 is a flowchart showing an example of the process of step S04 (communication control for the first and second UEs). In step S41, the processor 31 performs a process of improving the efficiency of communication of the UEs 10 classified as the second UE (vehicles 3 with the second UE thereon). For example, the processor 31 allocates more radio resources (referred to as physical resource blocks (RBs)) to be used for wireless communication between the individual UEs 10 and the base station 2 to the UEs 10 classified as the second UE than to the UEs 10 classified as the first UE. The processor 31 may allocate the RBs with higher priority to the second UE than to the first UE. This improves the data transfer efficiency of the second UE (UEs 10 located near the base station 2 or having a high SNR). The number of RBs can be increased in either or both of the direction from the UE 10 to the base station 2 (uplink direction) and the opposite direction (downlink direction). Step S41 is optional.

In step S42, the processor 31 performs predetermined communication throttling on the UEs 10 classified as the first UE (vehicles 3 with the first UE thereon). For example, for downlink data, the processor 31 increases the data transfer interval to the UEs 10. For uplink data, the processor 31 can give (send) the UEs 10 an instruction or request to increase the interval (reduce the frequency) of data transmission (upload) to the base station 2. A configuration may be adopted in which the base station 2 gives no explicit instruction regarding the upload interval to the UEs 10 and the UEs 10 autonomously adjust the upload interval.

However, in the case where the quality of service (QoS) has been set for a PDU session (communication channel from the UE 10 to the core network (UPF)) established for the first UE to be subject to communication throttling, the processor 31 reduces the throughput or allows delay within a range in which this QoS is satisfied.

In step S41, the processor 31 may perform control of marking the packet flow of the second UE to be transferred using a PDU session in a wired section between the base station 2 and the core network 1 (UPF) with "high priority" (e.g., add high priority header information to this packet flow). In this case, the packets of the packet flow are stored in a high priority queue (queue with a short residence time) and sent out with high priority. Alternatively, in step S42, the processor 31 may mark the packet flow of the first UE with "low priority" and perform communication throttling (bandwidth throttling) so as to increase the queue residence time. The communication throttling for the first UE may be performed by reducing RB allocation in a wireless section.

The processor 31 need not necessarily have the above configuration, and may perform the following communication control.
(Example 1) In step S41, the processor 31 performs control so that the smaller the distance from the second UE to the base station 2 is, the higher priority the second UE is given. Alternatively, in step S42, the processor 31 may perform the communication throttling by reducing the priority for the first UE.
(Example 2) Regarding the communication throttling in step S42, while the UE 10 is being classified as the first UE, the processor 31 stores data that is large in size, such as image data captured by an in-vehicle camera, in a storage device in the vehicle 3 (storage device 32 etc.). The processor 31 sends data that is smaller in size than the image data, such as data obtained by controller area network (CAN) signals or light detection and ranging (LIDAR), at intervals adjusted by the communication throttling.
(Example 3) In step S41, the processor 31 can improve the transmission rate or increase the upload frequency as priority control for communication of the second UE. Alternatively, the processor 31 may select a path (communication channel) to a queue in a wired section (wired network). For example, a plurality of paths (e.g., a high priority path and a low priority path) are provided between the base station 2 and the core network 1 (UPF), and the high priority path is used for the second UE for the priority control. At this time, the low priority path is used for the first UE.

For route selection in the wired network, a plurality of paths (path for the first UE and path for the second UE) can be set using, for example, Segment Routing over IPv6 (SRv6). Uplink Classifier (ULCL) of 3GPP (registered trademark), Multiple PDU Sessions, and IPv6 multi homing can be used as a technology of setting a high priority path and a low priority path and using them as appropriate. ULCL is a technology in which communication that meets specific conditions (e.g., communication of the second UE) is extracted and sent to a different DN. The second UE can use the high priority path and the first UE can use the low priority path. When Multiple PDU Sessions are used, a plurality of (high priority and low wired) PDU sessions is set, so that the second UE uses the high priority PDU session and the first UE uses the low priority PDU session.

In step S41, the processor 31 performs communication control (such as wired control) on communication of the second UE so that the efficient data transfer described above is performed. In step S42, the processor 31 can perform the various types of communication throttling on the first UE.

Referring back to FIG. 3, in step S05, the processor 31 sends downlink information to the UEs 10 classified as the second UE. The processor 31 selects a UE 10 (e.g., the UE 10a) to be a source (representative) of direct communication between the UEs from the second UE (e.g., the UEs 10a, 10b).

The direct communication between the UEs is wireless communication performed between the UEs 10 without going through the base station 2, and may include vehicle-to-vehicle (V2V) communication and vehicle-to-everything (V2X) communication. The processor 31 sends to one or more UEs 10 located around the UE 10a and classified as the first UE (e.g., UEs 10c, 10d) an instruction or request to spread (send) downlink information received from the base station 2. The instruction or request to spread downlink information may be sent either at the same timing as, or at a different timing from, the downlink information. For example, the processor 31 may send the instruction or request by adding, to the downlink information to be sent to the representative UE 10, flag information meaning "this information should be spread to (shared with) surrounding vehicles through direct communication between the UEs (vehicle-to-vehicle communication)." After step S05, the process returns to step S01.

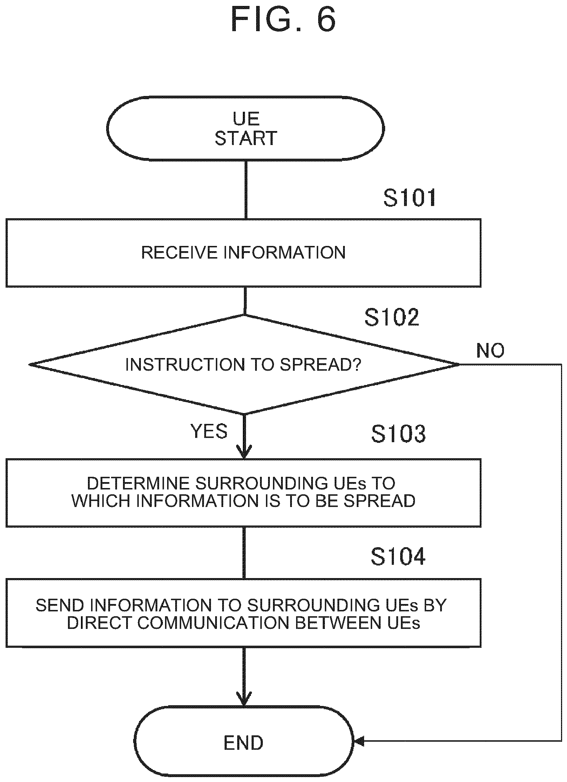

FIG. 6 is a flowchart of an example of a process in the UE 10. The process shown in FIG. 6 is performed by, for example, the processor 131 of the UE 10a. In step S101, the processor 131 of the UE 10a receives information sent from the base station 2.

In step S102, the processor 131 of the UE 10a determines whether the instruction or request to spread downstream information has been added to the information received from the base station 2. When the processor 131 of the UE 10a determines that the instruction or request to spread downlink information has been added to the information received from the base station 2, the process proceeds to step S103. Otherwise, the process of FIG. 6 ends.

In step S103, the processor 131 of the UE 10a determines the surrounding UEs 10 to which the information is to be spread. For example, the processor 131 of the UE 10a may use a Proximity Service (ProSe) Direct Discovery process to detect other UEs 10 located near the UE 10a (e.g., UEs 10c, 10d) as receiving UEs 10.

In step S104, the processor 131 of the UE 10a sends the information to be sent to these UEs 10 through direct communication between the UEs (vehicle-to-vehicle communication). For example, a V2X communication procedure in broadcast mode via a PC5 reference point can be used for the direct communication between the UEs.

The receiving UEs (UEs 10c, 10d) each determines a destination layer-2 ID for broadcast reception of the information. The transmitting UE (UE 10a) determines a source layer-2 ID and a destination layer-2 ID. At this time, the UE 10a determines the destination layer-2 IDs determined by the UEs 10c, 10d. The UE 10a sends a broadcast message including V2X data (information to be sent) using the source layer-2 ID and the destination layer-2 IDs. The UEs 10c, 10d receives the V2X data in the broadcast message based on the destination layer-2 IDs in the broadcast message. In this way, the UE 10a can spread the information received from the base station 2 to the UEs 10c, 10d.

The communication control device 20 according to the embodiment includes the processor 31 (control unit). The processor 31 performs communication throttling on the first UE determined to be located far from the base station 2 out of the UEs 10 connected to the base station 2. A UE 10 located far from the base station 2 consumes more power than a UE 10 located near the base station 2. Therefore, performing communication throttling on the UEs 10 determined to be the first UE can reduce power consumption related to communication.

The communication control device 20 (processor 31) can perform communication throttling on the first UE when the communication control device 20 (processor 31) makes at least one of the following determinations: the number of UEs 10 connected to the base station 2 is equal to or greater than the threshold, congestion has occurred in the base station 2, and traffic congestion has occurred in the area to which the base station 2 belongs.

The communication control device 20 (processor 31) can also perform communication throttling on the first UE determined to be located far from the base station 2 based on information indicating either or both of the distances between the base station 2 and the individual UEs 10 and the communication qualities (SNRs) between the base station 2 and the individual UEs 10.

The communication throttling described in the embodiment may include increasing the data transfer interval in communication of the first UE. The communication control device 20 (processor 31) can give the first UE an instruction or request regarding communication throttling. In the embodiment, the communication throttling is performed within a range in which the quality of service (QoS) determined for the first UE is maintained.

In the embodiment, the communication control device 20 (processor 31) can exclude communication of non-real-time data from the communication throttling. The communication control device 20 (processor 31) can perform a process of improving the efficiency (e.g., increasing the priority) of communication of the second UE that is not subject to the communication throttling out of the UEs 10.

The communication control device 20 (processor 31) can send to the second UE that is not subject to the communication throttling out of the UEs 10 an instruction or request to send information received from the base station 2 to the first UE by direct communication between the UEs.

In the embodiment, each UE 10 classified as the second UE includes the processor 131 (control unit). The processor 131 can receive information from the base station 2 and send the information received from the base station 2 to the first UE by direct communication between the UEs.

The above embodiment and modifications are merely illustrative, and the present disclosure may be modified as appropriate without departing from the spirit and scope of the present disclosure. The processes and means described in the present disclosure can be combined as desired as long as no technical contradiction occurs.

The processes described as being performed by a single device may be performed in a distributed manner by a plurality of devices. The processes described as being performed by different devices may be performed by a single device. In a computer system, the hardware configuration (server configuration) that implements functions can be flexibly changed.

The present disclosure can also be implemented by supplying computer programs implementing the functions described in the above embodiment to a computer and causing one or more processors of the computer to read and execute the computer programs. Such computer programs may be provided to the computer by a non-transitory computer-readable storage medium that can be connected to a system bus of the computer, or may be provided to the computer via a network. Examples of the non-transitory computer-readable storage medium include: any type of disk or disc such as a magnetic disk (floppy (registered trademark) disk, hard disk drive (HDD), etc.) and an optical disc (compact disc read-only memory (CD-ROM), digital versatile disc (DVD), Blu-ray disc, etc.); and any type of medium suitable for storing electronic instructions such as a read-only memory (ROM), a random access memory (RAM), an erasable programmable read-only memory (EPROM), an electrically erasable programmable read-only memory (EEPROM), a magnetic card, a flash memory, and an optical card.

A communication control device according to a first aspect of the present disclosure includes a processor, the processor being configured to perform communication throttling on a first user equipment determined to be located far from a base station out of a plurality of user equipments connected to the base station.

In the above aspect, the processor may be configured to perform the communication throttling on the first user equipment when the communication control device makes at least one of: a determination that the number of user equipments connected to the base station is equal to or greater than a threshold, a determination that congestion has occurred in the base station, and a determination that traffic congestion has occurred in an area to which the base station belongs.

In the above aspect, the processor may be configured to perform the communication throttling on the first user equipment determined to be located far from the base station based on information indicating either or both of a distance between the base station and each of the user equipments and a communication quality between the base station and each of the user equipments.

In the above aspect, the communication throttling may include increasing a data transfer interval in communication of the first user equipment.

In the above aspect, the processor may be configured to give the first user equipment an instruction or request regarding the communication throttling.

In the above aspect, the communication throttling may be performed within a range in which a quality of service determined for the first user equipment is maintained.

In the above aspect, the processor may be configured to exclude communication of non-real-time data from the communication throttling.

In the above aspect, the processor may be configured to perform a process of improving efficiency of communication of a second user equipment that is not subject to the communication throttling out of the user equipments.

In the above aspect, the processor may be configured to send, to a second user equipment that is not subj ect to the communication throttling out of the user equipments, an instruction or request to send information received from the base station to the first user equipment by direct communication between the user equipments.

A communication control method according to a second aspect of the present disclosure includes performing, by a communication control device, communication throttling on a first user equipment determined to be located far from a base station out of a plurality of user equipments connected to the base station.

In the above aspect, the communication throttling may be performed on the first user equipment when at least one of a determination that the number of user equipments connected to the base station is equal to or greater than a threshold, a determination that congestion has occurred in the base station, and a determination that traffic congestion has occurred in an area to which the base station belongs, is made.

In the above aspect, the first user equipment may be determined to be located far from the base station based on information indicating either or both of a distance between the base station and each of the user equipments and a communication quality between the base station and each of the user equipments.

In the above aspect, the communication throttling may include increasing a data transfer interval in communication of the first user equipment.

In the above aspect, the communication control method may further include giving, from the communication control device to the first user equipment, an instruction or request regarding the communication throttling.

In the above aspect, the communication throttling may be performed within a range in which a quality of service determined for the first user equipment is maintained.

In the above aspect, the communication control method may further include excluding, by the communication control device, communication of non-real-time data from the communication throttling.

In the above aspect, the communication control method may further include performing, by the communication control device, a process of improving efficiency of communication of a second user equipment that is not subject to the communication throttling out of the user equipments.

In the above aspect, the communication control method may further include sending, from the communication control device to a second user equipment that is not subject to the communication throttling out of the user equipments, an instruction or request to send information received from the base station to the first user equipment by direct communication between the user equipments.

A non-transitory storage medium according to a third aspect of the present disclosure stores instructions that are executable by a processor of a computer and that cause the computer to operate as the communication control device according to the first aspect.

A user equipment according to a fourth aspect of the present disclosure is not subjected to communication throttling out of a plurality of user equipments connected to a base station when the communication throttling is performed on a first user equipment determined to be located far from a base station out of the user equipments. The user equipment includes a processor configured to receive information from the base station and to send the information received from the base station to the first user equipment by direct communication between the user equipments.

## Claims

1. A communication control device (20) comprising a processor (31), the processor (31) being configured to perform communication throttling on a first user equipment determined to be located far from a base station out of a plurality of user equipments connected to the base station.

2. The communication control device (20) according to claim 1, wherein the processor (31) is configured to perform the communication throttling on the first user equipment when the communication control device (20) makes at least one of: a determination that the number of user equipments connected to the base station is equal to or greater than a threshold, a determination that congestion has occurred in the base station, and a determination that traffic congestion has occurred in an area to which the base station belongs.

3. The communication control device (20) according to claim 1 or claim 2, wherein the processor (31) is configured to perform the communication throttling on the first user equipment determined to be located far from the base station based on information indicating either or both of a distance between the base station and each of the user equipments and a communication quality between the base station and each of the user equipments.

4. The communication control device (20) according to any preceding claim, wherein the communication throttling includes increasing a data transfer interval in communication of the first user equipment.

5. The communication control device (20) according to any preceding claim, wherein the processor (31) is configured to give the first user equipment an instruction or request regarding the communication throttling.

6. The communication control device (20) according to any preceding claim, wherein the communication throttling is performed within a range in which a quality of service determined for the first user equipment is maintained.

7. The communication control device (20) according to any preceding claim, wherein the processor (31) is configured to exclude communication of non-real-time data from the communication throttling.

8. The communication control device (20) according to any preceding claim, wherein the processor (31) is configured to perform a process of improving efficiency of communication of a second user equipment that is not subject to the communication throttling out of the user equipments.

9. The communication control device (20) according to any preceding claim, wherein the processor (31) is configured to send, to a second user equipment that is not subject to the communication throttling out of the user equipments, an instruction or request to send information received from the base station to the first user equipment by direct communication between the user equipments.

10. A communication control method comprising performing, by a communication control device (20), communication throttling on a first user equipment determined to be located far from a base station out of a plurality of user equipments connected to the base station.

11. The communication control method according to claim 10, wherein the communication throttling is performed on the first user equipment when at least one of a determination that the number of user equipments connected to the base station is equal to or greater than a threshold, a determination that congestion has occurred in the base station, and a determination that traffic congestion has occurred in an area to which the base station belongs, is made.

12. The communication control method according to claim 10 or claim 11, wherein the first user equipment is determined to be located far from the base station based on information indicating either or both of a distance between the base station and each of the user equipments and a communication quality between the base station and each of the user equipments.

13. The communication control method according to any of claims 10 to 12, wherein the communication throttling includes increasing a data transfer interval in communication of the first user equipment.

14. A non-transitory storage medium storing instructions that are executable by a processor (31) of a computer and that cause the computer to operate as the communication control device (20) according to claim 1.

15. A user equipment that is not subj ected to communication throttling out of a plurality of user equipments connected to a base station when the communication throttling is performed on a first user equipment determined to be located far from a base station out of the user equipments, the user equipment comprising
a processor configured to receive information from the base station and to send the information received from the base station to the first user equipment by direct communication between the user equipments.
